Europäisches Patentamt

European Patent Office

Office européen des brevets

(11) Veröffentlichungsnummer: **0 170 934**
**A2**

(12) **EUROPÄISCHE PATENTANMELDUNG**

(21) Anmeldenummer: **85108756.9**

(51) Int. Cl.⁴: **F 16 L 59/06**

(22) Anmeldetag: **12.07.85**

(30) Priorität: **08.08.84 DE 3429151**

(43) Veröffentlichungstag der Anmeldung: **12.02.86**
**Patentblatt 86/7**

(84) Benannte Vertragsstaaten: **BE FR GB IT NL**

(71) Anmelder: **BROWN, BOVERI & CIE Aktiengesellschaft,
Kallstadter Strasse 1, D-6800 Mannheim 31 (DE)**

(72) Erfinder: **Dustmann, Cord-Henrich, Dr. Dipl.-Phys.,
Diemstrasse 10, D-6940 Weinheim (DE)**
Erfinder: **Reiss, Harald, Dr. Dipl.-Phys.,
Reinhard-Hoppe-Strasse 6 - 8, D-6900 Heidelberg (DE)**
Erfinder: **Schmaderer, Franz, Dr. Dipl.-Ing.,
Türmergasse 13, D-6900 Heidelberg (DE)**
Erfinder: **Wahl, Georg, Dr. Dipl.-Phys.,
Franz-Liszt-Strasse 8, D-6904 Eppelheim (DE)**
Erfinder: **Ziegenbein, Botho, Dr. Dipl.-Phys.,
Eichendorffstrasse 4, D-6901 Nekkarsteinach (DE)**

(74) Vertreter: **Kempe, Wolfgang, Dr. et al, c/o Brown, Boveri
& Cie AG Postfach 351, D-6800 Mannheim 1 (DE)**

(54) **Isoliereinrichtung.**

(57) Die Erfindung bezieht sich auf eine Isoliereinrichtung (1) für hohe und tiefe Temperaturen. Die Isoliereinrichtung (1) wird vorzugsweise durch ein doppelwandiges Gehäuse (2) gebildet, zwischen dessen äußerer und innerer Gehäusewandung (2A, 2I) ein evakuierter Raum (3) vorgesehen ist, in das Isoliermaterial (4) eingefüllt ist. Erfindungsgemäß werden hierfür metallische oder metallisch beschichtete Fasern (6) verwendet. Die beschichteten Fasern (6) werden aus einem Glas-, einem Kunststoff- oder einem Keramikwerkstoff hergestellt und anschließend mit Aluminium oder einem anderen Metall beschichtet. Anstelle eines ausschließlich aus metallischen oder metallbeschichteten Fasern (6) bestehenden Isoliermaterials (4) kann auch eine Mischung aus diesen Fasern und herkömmlichen Fasern (7) aus Glas, Kunststoff oder Keramik verwendet werden. Eine Mischung aus metallischen oder metallbeschichteten Fasern (6) und einem Pulver (8) ist ebenfalls möglich. Ebensogute isolierende Wirkungen werden mit einem Isoliermaterial (4) erreicht, das aus Pulver (8), herkömmlichen Fasern (7) und metallischen oder metallbeschichteten Fasern (6) zusammengesetzt ist.

B R O W N , B O V E R I & C I E     AKTIENGESELLSCHAFT

Mannheim                                          03. August 1984

Mp-Nr.619/84                                      ZPT/P1-Kr/Kn

## Isoliereinrichtung

Die Erfindung bezieht sich auf eine Isoliereinrichtung
für hohe und tiefe Temperaturen gemäß dem Oberbegriff
des Patentanspruches 1.

Solche Isoliereinrichtungen kommen dort zur Anwendung,
wo es darum geht, Werkstoffe oder Geräte auf einer vorgegebenen hohen oder tiefen Temperatur zu halten.

Aus der DE-OS 3 235 708 ist eine thermische Isolierung
bekannt, die um eine Hochtemperaturspeicherbatterie angeordnet ist. Im Inneren der Isolierung sind Speicherzellen auf der Basis von Natrium und Schwefel angeordnet, die bei einer Temperatur von 350 °C arbeiten. Die
Isolierung wird durch ein doppelwandiges Gehäuse gebildet, wobei zwischen der inneren und äußeren Gehäusewandung ein evakuierter Raum vorgesehen ist, der mit Isoliermaterial ausgefüllt ist. Bei der hier beschriebenen
Einrichtung besteht das Isoliermaterial aus Pulver und
Fasern. Bei dem pulverförmigen Material handelt es sich
vorzugsweise um ein oder mehrere infrarotoptische Trübungsmittel. Als Fasermaterial werden Borsilikatglasfasern verwendet. Mit diesem keramischen Isoliermaterial
lassen sich im Vakuum und unter äußerer atomosphärischer
Druckbelastung Wärmeleitfähigkeiten von 2 bis 8 mW/(mK)
bei hohen Temperaturen erzielen.

Der Erfindung liegt die Aufgabe zugrunde, eine Isoliereinrichtung zu schaffen, die in gewissen Grenzen druckbelastbar ist, deren Wärmeleitfähigkeit auch bei hohen Temperaturen einen Wert von 1 mW/(mK) unterschreitet, und zudem im Hoch- und im Tieftemperaturbereich eingesetzt werden kann.

Diese Aufgabe wird erfindungsgemäß durch die kennzeichnenden Merkmale des Patentanspruches 1 gelöst.

Das Isoliermaterial besteht aus metallischen Fasern. Diese besitzen totalreflektierende Eigenschaften. Als Isoliermaterial können auch metallbeschichtete Fasern verwendet werden. Diese besitzen die gleichen totalreflektierenden Eigenschaften wie reine metallische Fasern. Diese Fasern werden aus einem Glas-, Kunststoff- oder Keramikwerkstoff gefertigt und anschließend mit einem metallischen Überzug aus Aluminium oder einem anderen Metall versehen. Bei der Herstellung der Isoliereinrichtung werden diese metallischen oder metallbeschichteten Fasern vorzugsweise in einen evakuierten Raum eingefüllt, der den Innenraum der Isoliereinrichtung allseitig umgibt.

Bei einer anderen Ausführungsform der Erfindung kann das Isoliermaterial auch aus einer Mischung bestehend aus herkömmlichen Fasern und metallischen bzw. metallbeschichteten Fasern gebildet werden. Als herkömmliche Fasern werden vorzugsweise Fasern aus Glas, Kunststoff oder Keramik verwendet. Bei der Ausbildung einer Isoliereinrichtung mit einem solchen Isoliermaterial werden vorzugsweise bis zu 99 Gew.% der herkömmlichen Fasern mit metallischen oder metallbeschichteten Fasern gemischt, wobei sich die Gewichtsangabe auf das Gesamtgewicht des verwendeten Isoliermaterials bezieht.

619/84

03. August 1984

3       0170934

Das für die erfindungsgemäße Isoliereinrichtung verwendete Isoliermaterial kann, falls es die Gegebenheiten erfordern, auch aus metallischen bzw. metallbeschichteten Fasern und einem isolierenden Pulver bestehen, wobei die Menge des verwendeten Pulvers bis zu 99 Gew.% bezogen auf das Gesamtgewicht des verwendeten Isoliermaterials beträgt.

Ferner ist es möglich, eine Isoliereinrichtung auszubilden, deren Isoliermaterial ein Pulver, herkömmliche Fasern und metallische bzw. metallbeschichtete Fasern enthält. Die Anteile an herkömmlichen Fasern und an Pulver betragen wiederum bis zu 99 Gew.%, während der restliche Anteil aus metallischen bzw. metallbeschichteten Fasern besteht. Die Gewichtsangaben beziehen sich auch hierbei auf das Gesamtgewicht des verwendeten Isoliermaterials. Bei der Verwendung von isolierenden Pulvern werden insbesondere solche Pulver verwendet, die aus $SiO_2$, aus $Al_2O_3$ oder $TiO_2$ gewonnen werden. Das dem Isoliermaterial beigemischte Pulver weist höchstens eine Teilchengröße zwischen 1 bis 3 µm auf. Die erfindungsgemäße Isoliereinrichtung kann bei Supraleitern als auch bei Hochtemperatur-Speicherbatterien eingesetzt werden.

Weitere erfindungswesentliche Merkmale der Erfindung sind in den Unteransprüchen gekennzeichnet.

Die Erfindung wird nachfolgend anhand einer Zeichnung näher erläutert.

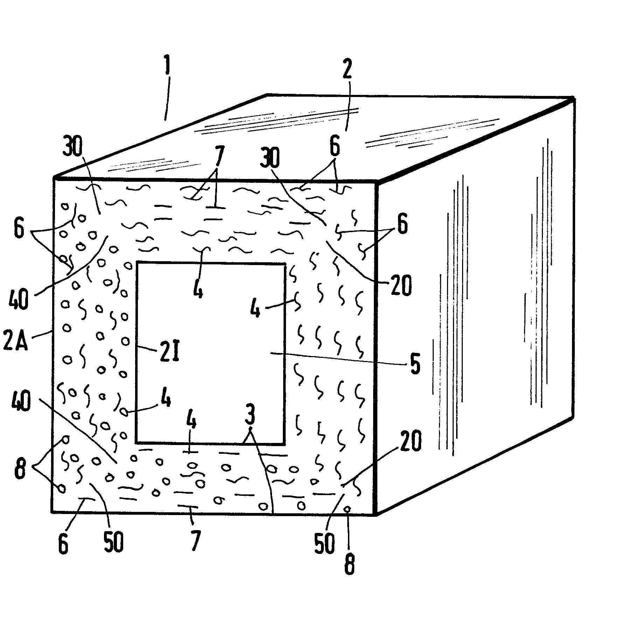

Die einzige Figur zeigt einen Vertikalschnitt durch die Isoliereinrichtung 1, die nach außenhin durch ein doppelwandiges Gehäuse 2 begrenzt wird. Das Gehäuse 2 wird durch zwei quaderförmige Körper aus Metall mit unterschiedlichen Abmessungen gebildet, wobei der kleinere Körper konzentrisch in dem größeren angeordnet ist. Zwischen der äußeren Gehäusewandung 2A und der inneren Gehäusewandung 2I befindet sich ein Raum 3, der mit einem Isoliermaterial 4 ausgefüllt ist. Die äußeren und inneren Gehäusewandungen 2A und 2I der Isoliereinrichtung 1 sind gasdicht ausgebildet, so daß der Raum 3 evakuiert werden kann. Bei dem hier dargestellten Ausführungsbeispiel weist er höchstens noch einen Restgasdruck von 10 Pa auf. Der Innenraum 5 der Isoliereinrichtung dient zur Aufnahme eines Gerätes (hier nicht dargestellt) oder eines festen bzw. gasförmigen Stoffes (hier nicht dargestellt), der auf einer definierten Temperatur gehalten werden soll. Es ist dabei gleichgültig, ob mit der Isoliereinrichtung 1 sehr hohe oder sehr tiefe Temperaturen aufrecht erhalten werden sollen. Das für die Isolierung verwendete Isoliermaterial besteht aus metallischen oder metallbeschichteten Fasern 6. Diese Fasern sind entweder aus reinem Metall oder aus einem Glas-, einem Kunststoff- oder einem Keramikwerkstoff gefertigt, und mit einem metallischen Überzug versehen, der aus Aluminium oder einem anderen Metall besteht. Aufgrund dieses Überzugs sind diese Fasern 6 ebenso wie die aus Metall gefertigten Fasern 6 totalreflektierend. Anstelle dieser metallischen oder metallbeschichteten Fasern 6 kann für das Isoliermaterial auch eine Mischung aus herkömmlich bekannten Fasern, die aus Glas, Keramik oder Kunststoff gefertigt sind, und diesen metallischen oder metallbeschichteten Fasern 6 verwendet werden. Bei der Verwendung eines solchen Isoliermaterials 4 beträgt der Anteil der metallischen bzw. metallbeschichteten Fasern 1-100 %, während der übrige Anteil durch diese herkömmlichen Fasern 7 gebildet wird. Erfindungsgemäß kann das Isoliermaterial auch aus einer Mischung eines pulverförmigen Materials und metallischen oder metallbeschichteten Fasern bestehen. In diesem Fall werden den Fasern 6 bis zu 99 Gew.% eines Pulvers 8 beigemischt. Die Gewichtsangabe bezieht sich auf das Gesamtgewicht des verwendeten Isoliermaterials. Als Pulver 8 eignet sich insbesondere $Al_2O_3$, $SiO_2$ oder $TiO_2$. Das isolierende Pulver weist dabei höchstens eine Teilchengröße zwischen 1 bis 3 μm auf. Eine Mischung aus den oben genannten pulverförmigen Werkstoffen kann ebenfalls verwendet werden.

Um die Vielfalt der verwendbaren Isoliermaterialien 4 zu veranschaulichen, ist bei der dargestellten Isoliereinrichtung der Bereich 20 des Raumes 3 ausschließlich mit metallischen oder metallbeschichteten Fasern 6 ausgefüllt. Der Bereich 30 beinhaltet ein Isoliermaterial 4, das aus einer Mischung von herkömmlichen Fasern 7 und metallischen bzw. metallbeschichteten Fasern 6 gebildet ist. Der Bereich 40 des Raumes enthält ein Isoliermaterial 4, das aus einem Pulver 8 und metallischen bzw. metallbeschichteten Fasern 6 besteht. Der Bereich 50 ist durch ein Isoliermaterial 4 ausgefüllt, das aus metallischen bzw. metallbeschichteten Fasern 6, herkömmlichen Fasern 7 und einem oder mehrerer Pulver 8 gebildet wird.

Normalerweise wird die erfindungsgemäße Isoliereinrichtung 1 so hergestellt, daß der Raum 3 nur mit einem der vier möglichen Isoliermaterialien 4 ausgefüllt ist. Vorzugsweise wird der Raum 3 ausschließlich mit metallischen bzw. metallbeschichteten Fasern 6 ausgefüllt.

Patentansprüche

1. Isoliereinrichtung für hohe und tiefe Temperaturen mit wenigstens einem Isoliermaterial (4), dadurch gekennzeichnet, daß das Isoliermaterial (4) wenigstens aus totalreflektierenden Fasern (6) gebildet ist.

2. Isoliereinrichtung nach Anspruch 1, dadurch gekennzeichnet, daß die totalreflektierenden Fasern (6) aus metallbeschichteten Glas-, Kunststoff- oder Keramikfasern bestehen.

3. Isoliereinrichtung nach Anspruch 2, dadurch gekennzeichnet, daß die metallische Beschichtung der Fasern (6) aus Aluminium oder anderen Metallen gebildet ist.

4. Isoliereinrichtung nach Anspruch 1, dadurch gekennzeichnet, daß die totalreflektierenden Fasern (6) aus einem reinen Metall gefertigt sind.

5. Isoliereinrichtung nach einem der Ansprüche 1 bis 4, dadurch gekennzeichnet, daß das Isoliermaterial (4) metallbeschichtete oder metallische Fasern (6) und bis zu 99 Gew.% eines isolierenden Pulvers (8) enthält.

6. Isoliereinrichtung nach einem der Ansprüche 1 bis 4, dadurch gekennzeichnet, daß das Isoliermaterial (4) metallische oder metallbeschichtete Fasern (6) und bis zu 99 Gew.% Glas-, Keramik- oder Kunststoffasern enthält.

7. Isoliereinrichtung nach einem der Ansprüche 1 bis 4, dadurch gekennzeichnet, daß das Isoliermaterial (4) wenigstens ein isolierendes Pulver, Glas-, Keramik- oder Kunststoffasern (7) und metallische oder metallbeschichtete Fasern (6) enthält.

8. Isoliereinrichtung nach einem der Ansprüche 5 bis 7, dadurch gekennzeichnet, daß das isolierende Pulver (8) aus $SiO_2$, $Al_2O_3$, $TiO_2$ oder aus einer Mischung dieser Werkstoffe besteht.